# EUROPÄISCHE PATENTANMELDUNG

(11) **EP 4 675 079 A1**
(43) Veröffentlichungstag der Anmeldung: **07.01.2026**
(21) Anmeldenummer: 24186354.7
(22) Anmeldetag: 03.07.2024
(51) Int. Cl.: E21B 7/02, E02F 9/22, F16H 61/4078, F16H 61/44

(54) **SPEZIALTIEFBAUGERÄT UND VERFAHREN ZUM BETRIEB EINES SPEZIALTIEFBAUGERÄTES**

(71) Anmelder: ABI Anlagentechnik-Baumaschinen-Industriebedarf Maschinenfabrik und Vertriebsgesellschaft mbH, 63843 Niedernberg (DE)
(72) Erfinder: KLEIBL, Albrecht, D-02747 Grosshennersdorf (DE)
(74) Vertreter: Patentanwälte Dörner & Kötter PartG mbB

(57) **Zusammenfassung**

Die Erfindung betrifft ein Spezialtiefbaugerät, insbesondere Ramm- oder Bohrgerät, umfassend ein Trägergerät (1), an dem eine Aufnahme für ein hydraulisches Arbeitsgerät angeordnet ist, sowie zwei Hydraulikhauptpumpen (61, 62) zur Bereitstellung wenigstens eines Hydraulikölvolumenstroms zum Betrieb eines aufgenommenen Arbeitsgerätes, die über Leitungen (63, 64, 65) mit der Aufnahme verbunden sind, dadurch gekennzeichnet, dass eine erste der Hydraulikhauptpumpen (61) durch einen mit dieser verbundenen ersten Motor und die zweite der Hydraulikhauptpumpen durch einen separaten, mit dieser verbundenen zweiten Motor angetrieben ist. Die Erfindung betrifft weiterhin ein Verfahren zum Betrieb eines solchen Spezialtiefbaugerätes.

## Beschreibung

Die Erfindung betrifft Spezialtiefbaugerät, insbesondere Ramm- oder Bohrgerät, umfassend ein Trägergerät, an dem eine Aufnahme für ein hydraulisches Arbeitsgerät angeordnet ist, nach dem Oberbegriff des Patentanspruchs 1. Die Erfindung betrifft weiterhin ein Verfahren zum Betrieb eines Spezialtiefbaugerätes, insbesondere Ramm- oder Bohrgerätes mit einem hydraulischen Arbeitsgerät nach dem Oberbegriff des Patentanspruchs 16.

Spezialtiefbaumaschinen wie Ramm- oder Bohrgeräte sind mobile Arbeitsmaschinen, zu deren Antrieb regelmäßig Dieselmotoren eingesetzt werden. Über den Dieselmotor des Trägergerätes werden Hydraulikpumpen angetrieben, welche die Hydraulikmotoren des Arbeitsgerätes, beispielsweise eines Rammoder Bohrgerätes über einen Hydraulikkreislauf antreiben. Die Spezialtiefbaugeräte werden mit verschiedenen Arbeitsgeräten betrieben. Die Leistungsübertragung erfolgt hydraulisch. Weist das Spezialtiefbaugerät ein Trägergerät mit einem Fahrwerk auf, so wird dieses ebenso wie die Arbeitsgeräte von den Ölvolumenströmen dieser Hydraulikpumpen angetrieben.

Es kommen sowohl Arbeitsgeräte zum Einsatz, die mit einem einzigen Hydraulikvolumenstrom betrieben werden, sowie auch solche Arbeitsgeräte, die zwei voneinander unabhängige Hydraulikvolumenströme benötigen, beispielsweise um ein Bohrrohr und eine Bohrschnecke unabhängig voneinander anzutreiben. Deshalb sind in Spezialtiefbaugeräten üblicherweise zwei Hauptpumpen verbaut, die zwei unabhängig regelbare Volumenströme ermöglichen, die bei Bedarf zusammengefasst werden können. Außerdem werden üblicherweise auch die Kettenfahrwerke über die Hauptpumpen betrieben. Da die Spezialtiefbaugeräte auf zwei Kettenlaufwerken fahren, und die Fahrwerke unabhängig voneinander antreibbar sein müssen, sind hierfür auch zwei Hauptpumpen sinnvoll.

Bei solchen Arbeitsgeräten, die nur mit einem Arbeitskreislauf, also mit nur einem Hydraulikvolumenstrom betrieben werden, wie beispielsweise Vibratoren oder Kellybohrantrieben, werden die Volumenströme der Hauptpumpen addiert.

Dies erfolgt über hydraulische Ventile oder über eine hydraulische Verbindungder beiden Hydraulikkreise der beiden Hauptpumpen. Bei den beiden Hauptpumpen handelt es sich üblicherweise um Verstellpumpen, deren Schluckvolumen verstellbar und bis auf Null abregelbar ist. Bei größeren Maschinen kommen auch zusätzliche Hauptpumpen zum Einsatz, die zusätzlichen Volumenstrom bereitstellen können, der zu einem der beiden unabhängigen Volumenströme oder zu dem summierten Volumenstrom addiert werden kann. Meist sind vier Arbeitsleitungen vom Hydraulikaggregat zum Arbeitsgerät installiert. Diese vier Arbeitsleitungen umfassen zwei Vor- und zwei Rücklaufleitungen und ermöglichen zwei unabhängige Kreisläufe.

Die beiden Hauptpumpen werden üblicherweise über ein Pumpenverteilergetriebe vom Dieselmotor angetrieben. Der Antrieb kann auch direkt erfolgen, sodass beide Pumpen direkt an der Kurbelwelle angeschlossen sind. Aufgrund der mechanischen Kopplung drehen die beiden Hauptpumpen gleich schnell. Die erforderlichen Volumenströme werden durch Verstellen der Schluckvolumina der Hauptpumpen erzeugt.

Die energetischen Verluste in den Hauptpumpen sind erheblich. Moderne Verstellpumpen erreichen zwar Wirkungsgrade von nahezu 90%, allerdings nur unter optimalen Bedingungen. Bei reduziertem Schluckvolumen, ungünstigen Druckverhältnissen und niedriger Drehzahl kann der Pumpenwirkungsgrad auf unter 70% sinken. Im Leerlauf, bei Schluckvolumen Null, können die Antriebsleistungen zum Durchdrehen der Hauptpumpen einige kW betragen. Diese Leistungen werden als Schleppleistung oder Schleppverluste bezeichnet und treten immer dann auf, wenn am Arbeitsgerät keine hydraulische Leistung benötigt wird, der Dieselmotor aber nicht abgeschaltet wird. Zur Vermeidung solcher Verlustleistungen wird in der EP 2 546 420 A2 vorgeschlagen, eine Kupplung anzuordnen, über welche die Motorwelle von den Hauptpumpen getrennt werden kann.

Bei Betriebszuständen, die nur kleine Ölvolumenströme erfordern, sind die Pumpenwirkungsgrade besonders schlecht, da sowohl das Reduzieren des Schluckvolumens der Hauptpumpen als auch sehr niedrige Pumpendrehzahlen den Wirkungsgrad senken. Werden bei Arbeitsgeräten, die nicht auf getrennte Volumenströme angewiesen sind, kleine Volumenströme benötigt, werden die Hauptpumpen parallel angesteuert. Dies bedeutet, dass beide Pumpen mit gleichem Schluckvolumen betrieben werden. Zwar könnte durch asymmetrische Ansteuerung der Hauptpumpen in einzelnen Situationen Energie gespart werden. Da hierbei jedoch eine der Hauptpumpen leer mitdrehen würde, entständen hier wiederum Schleppverluste, wodurch die gesparte Energie weitgehend aufgebraucht würde.

An dieser Stelle wird in der EP 2 557 233 A1 vorgeschlagen, an dem Arbeitsgerät Hydraulikmotoren mit veränderbarem Schluckvolumen vorzusehen und bei geringen Leistungsanforderungen den Volumenstrom sowie das Schluckvolumen der Hydraulikmotoren des Arbeitsgerätes zu reduzieren. Hierbei werden zwei Möglichkeiten aufgezeigt, den Volumenstrom zu reduzieren, nämlich die Reduzierung der Schluckvolumina der Hauptpumpen sowie die Reduzierung der Hauptpumpendrehzahl, die direkt von der Drehzahl des Dieselmotors abhängt. Es hat sich gezeigt, dass auf diese Weise die bei der Übertragung hydraulischer Leistung unvermeidlichen hydraulischen Verluste, deutlich reduziert werden können. Nachteilig erweist sich hier jedoch der bei kleinem Pumpenschluckvolumen und niedriger Pumpendrehzahl schlechte Wirkungsgrad der Pumpen.

Schlechte Pumpenwirkungsgrade oder Schleppverluste erfordern Antriebsleistung, die einen Energieverbrauch hervorruft, der möglicherweise am Arbeitsgerät fehlt und der das Hydrauliköl aufheizt, das entsprechend gekühlt werden muss. Zur Kühlung des Hydrauliköls kommen regelmäßig Kühler zum Einsatz, die das Hydrauliköl mit Umgebungsluft kühlen und die mit Lüftern ausgestattet sind, deren Motoren wiederum Energie verbrauchen, um die Wärme aus dem Hydrauliköl an die Umgebung abzugeben.

Hier setzt die vorliegende Erfindung an. Der Erfindung liegt die Aufgabe zugrunde, ein Spezialtiefbaugerät, insbesondere Ramm- oder Bohrgerät bereitzustellen, das insbesondere bei geringeren von einem angeordneten Arbeitsgerät abgerufenen Leistungen einen höheren Wirkungsgrad aufweist. Gemäß der Erfindung wird diese Aufgabe durch ein Spezialtiefbaugerät mit den Merkmalen des kennzeichnenden Teils des Patentanspruchs 1 gelöst.

Mit der Erfindung ist ein Spezialtiefbaugerät, insbesondere Ramm- oder Bohrgerät bereitzustellen, das insbesondere bei geringeren von einem angeordneten Arbeitsgerät abgerufenen Leistungen einen höheren Wirkungsgrad aufweist. Dadurch, dass die zwei Hydraulikhauptpumpen jeweils über einen eigenen Antriebsmotor angetrieben sind, das heißt, dass eine erste der Hydraulikhauptpumpen durch einen mit dieser verbundenen ersten Motor und die zweite der Hydraulikpumpen durch einen separaten, mit dieser verbundenen zweiten Motor angetrieben ist, ist eine vollständige Abschaltung einer der beiden Hauptpumpen ermöglicht, wodurch deren Schleppverluste entfallen. Bevorzugt weist das Trägergerät ein Fahrwerk auf, das ebenso wie das Arbeitsgerät von wenigstens einem Hydraulikmotor angetrieben ist, der von den Hydraulikölvolumenströmen der beiden Hydraulikhauptpumpen gespeist ist.

Vorteilhaft weist das Trägergerät einen Mäkler auf, an dem ein Arbeitsgeräteschlitten verschiebbar angeordnet ist, der die Aufnahme für ein Arbeitsgerät aufweist.

Erfindungswesentlich ist der gegenüber dem Stand der Technik vollständig voneinander entkoppelte Antrieb der Hydraulikhauptpumpen, die somit unabhängig voneinander ansteuerbar sind, wodurch bei jeder Leistungsanforderung durch ein Arbeitsgerät ein Betrieb der Hydraulikhauptpumpen in einem Bereich mit einem hohen Wirkungsgrad ermöglicht ist. Bei geringer Leistungsanforderung kann so auch eine Hydraulikhauptpumpe abgeschaltet werden, um einen Betrieb der anderen Hydraulikhauptpumpe in einem Bereich mit einem hohen Wirkungsgrad zu erzielen.

In Weiterbildung der Erfindung ist wenigstens eine Hydrauliknebenpumpe zur Bereitstellung wenigstens eines Hydraulikölvolumenstroms zum Betrieb von Nebenaggregaten, beispielsweise für den Arbeitsgerätevorschub, der über Winden oder Hydraulikzylinder realisiert wird, für die Kinematik, zum Oberwagendrehen oder zum Antrieb der Lüfter, angeordnet. Hierdurch ist eine separate Versorgung von Nebenaggregaten, unabhängig von den Hydraulikhauptpumpen, erzielt. Bevorzugt ist wenigstens eine Hydrauliknebenpumpe von einem separaten dritten Motor, insbesondere einem Elektromotor angetrieben. Es kann auch sinnvoll sein, mehrere, jedoch nicht alle, Pumpen zu Gruppen zusammenzufassen und gemeinsam anzutreiben.

In Ausgestaltung der Erfindung ist die erste Hydraulikpumpe und/oder die zweite Hydraulikhauptpumpe als Konstantpumpe ausgebildet, deren Pumpenausgang vorzugsweise mit einem Rückschlagventil versehen ist. Hierdurch ist eine kompaktere Bauweise erzielt. Darüber hinaus sind Konstantpumpen kostengünstiger und arbeiten in vielen Situationen effizienter. Durch das Rückschlagventil ist ein Rückwärtsantrieb der abgeschalteten Hydraulikhauptpumpe durch den Druck, den die andere Hydraulikhauptpumpe im Öl aufbaut, verhindert.

In weiterer Ausgestaltung der Erfindung weist die erste Hydraulikpumpe und/oder die zweite Hydraulikpumpe ein verstellbares Schluckvolumen auf. Hierdurch ist neben der Drehzahl eine weitere Einstellung der Volumenströme ermöglicht.

In Weiterbildung der Erfindung sind der erste Motor und der zweite Motor mit einer Steuereinheit verbunden, über die sie unabhängig voneinander ansteuerbar sind, wobei der erste Motor und/oder der zweite Motor durch einen Elektromotor gebildet ist. Hierdurch ist ein effizienter Direktantrieb der Hydraulikhauptpumpen erzielt, die über die Steuereinheit gleichzeitig separat ansteuerbar sind.

In Ausgestaltung der Erfindung ist wenigstens eine der wenigstens einen Nebenhydraulikpumpe über einen separaten, dritten Motor angetrieben, der vorzugsweise durch einen Elektromotor gebildet ist. Vorteilhaft sind mehrere Nebenhydraulikpumpen angeordnet, die in wenigstens zwei Gruppen zusammengefasst sind, von denen wenigstens eine Gruppe über einen gemeinsamen Motor, vorzugsweise einen Elektromotor angetrieben ist.

Zur Energieversorgung von zum Antrieb einer Hauptpumpe und/oder einer Nebenpumpe angeordneten Elektromotoren kann ein Verbrennungsmotor, vorzugsweise ein Dieselmotor angeordnet sein, der einen Generator antreibt. Bevorzugt kann ein Pufferakku angeordnet sein, der elektrisch zwischen dem Generator und den Elektromotoren geschaltet ist. Alternativ oder zusätzlich kann zur Energieversorgung auch ein Netzanschluss und/oder ein ausreichend dimensionierter Akkumulator angeordnet sein.

Werden parallel zwei Hydraulikhauptpumpen mit verstellbarem Schluckvolumen jeweils durch einen Elektromotor angetrieben, können beliebig kleine Volumenströme realisiert werden. Variiert werden können Drehzahl, Schluckvolumen und Anzahl der angetriebenen Hydraulikhauptpumpen. Durch Abschalten einer Pumpe kann die andere Pumpe mit größerem Schluckvolumen oder höherer Drehzahl oder einer Kombination beider Größen betrieben werden. Bei kleinen Volumenströmen kann so ein deutlich höherer Gesamtwirkungsgrad erreicht werden.

Der Wirkungsgrad von Elektromotoren nimmt bei sehr kleinen Drehzahlen ab, sodass der Gesamtwirkungsgrad beim Abschalten einer Hydraulikhauptpumpe nicht nur durch den dann höheren Wirkungsgrad der anderen Hydraulikhauptpumpe, sondern möglicherweise auch durch den höheren Wirkungsgrad des Elektromotors gesteigert wird. Die stillgelegte Hydraulikhauptpumpe kann auf Fördervolumen Null eingestellt werden. Damit besteht auch keine Gefahr, dass sie vom Öldruck am Pumpenausgang rückwärts gedreht wird. Zusätzliche Rückschlagventile wie bei Konstantpumpen sind daher nicht erforderlich.

Wenn das Arbeitsgerät nicht zwei unabhängig regelbare Volumenströme benötigt oder einer der beiden unabhängig regelbaren Volumenströme nicht auf sehr kleine Werte abgeregelt werden muss, kann auch eine separat angetriebene Konstantpumpe mit einer separat angetriebenen Pumpe mit verstellbarem Schluckvolumen (Verstellpumpe) kombiniert werden. Diese Kombination erreicht bei hohen Volumenströmen einen besseren Wirkungsgrad als zwei Verstellpumpen. Bei kleineren Volumenströmen kann die Konstantpumpe allein arbeiten und erreicht dann ebenfalls einen sehr hohen Wirkungsgrad. Bei sehr kleinen Volumenströmen kann die Verstellpumpe allein arbeiten, was immer noch einen deutlich höheren Wirkungsgrad ermöglicht, als mit zwei gleich großen Verstellpumpen zu arbeiten, die parallel angesteuert werden.

In Ausgestaltung der Erfindung ist eine Rechnereinheit angeordnet, die mit der Steuereinheit verbunden ist und die eingerichtet ist, bei vorgegebenem Druck und Volumenstrom oder bei vorgegebener Leistung die Drehzahl des ersten Motors und die Drehzahl des zweiten Motors zu bestimmen, bei denen der beste Wirkungsgrad erzielt ist. Hierdurch ist ein effizienter Betrieb der Hydraulikhauptpumpen erzielt.

In weiterer Ausgestaltung der Erfindung ist in der Rechnereinheit ein mehrdimensionales Kennfeld hinterlegt, aus dem sich der Wirkungsgrad in Abhängigkeit zumindest von Drehzahl und Druckdifferenz ergibt und anhand dessen die Ermittlung der Drehzahlen des ersten Motors und des zweiten Motors erfolgt. Hierdurch ist von der Rechnereinheit über die Steuerung eine energetisch optimale Ansteuerung der Drehzahlen der Motoren sowie auch der einzustellenden Schluckvolumina ermöglicht, ohne dass der Bediener des Spezialtiefbaugerätes tätig werden muss.

Bevorzugt ist in der Rechnereinheit ein Kennfeld des ersten und ein Kennfeld des zweiten Motors hinterlegt, aus denen sich der Wirkungsgrad des jeweiligen Motors aus Drehzahl und Drehmoment ergibt, wobei die Ermittlung der Drehzahlen des ersten Motors und des zweiten Motors anhand der hinterlegten Kennfelder aller Motoren erfolgt. Besonders bevorzugt sind in der Rechnereinheit auch die Kennfelder der Hydraulikhauptpumpen hinterlegt.

Für eine Verstellpumpe gibt es ein dreidimensionales Kennfeld, in dem sich der Wirkungsgrad abhängig von Drehzahl, Druckdifferenz und Schluckvolumen ergibt, bei einer Konstantpumpe ist dieses Kennfeld zweidimensional. Diese Kennfelder werden überlagert vom Kennfeld des jeweiligen Elektromotors, das von Drehzahl und Drehmoment bestimmt wird. Für jede Kombination aus Druck und Volumenstrom ergibt sich so eine energetisch optimale Einstellung hinsichtlich Abschaltung einer Pumpe, Drehzahl oder Drehzahlen beider oder nur einer Pumpe und gegebenenfalls der einzustellenden Schluckvolumina.

Da sich die hydraulische Leistung als Produkt aus Druckdifferenz und Volumenstrom errechnen lässt, kann für jede am Arbeitsgerät erforderliche hydraulische Antriebsleistung eine Vielzahl an Kombinationen von Druck und Volumenstrom eingestellt werden, wobei sich für jeden Volumenstrom wieder Kombinationen aus Pumpendrehzahl und Pumpenschluckvolumen ergeben. Außerdem kann die Zahl der den Druck und Volumenstrom erzeugenden Pumpen durch Abschaltungen einzelner Pumpen variiert werden. Die Rechnereinheit ist vorzugsweise derart eingerichtet, dass sie aus den möglichen Kombinationen die energetisch sinnvollste auswählt.

In Weiterbildung der Erfindung sind Sensoren zur Erfassung des Volumenstroms und des Drucks wenigstens eines Hydraulikkreislaufs einer Hydraulikhauptpumpe und/oder Sensoren zur Erfassung der Drehzahl und/oder des Drucks und/oder des Schluckvolumens wenigstens einer Hydraulikhauptpumpe angeordnet, die mit der Rechnereinheit verbunden sind. Hierdurch ist eine Erfassung der tatsächlichen Systemgrößen ermöglicht. Durch den Vergleich der ermittelten optimalen Betriebsparameter der Pumpen und Motoren mit den von den Sensoren ermittelten tatsächlich Betriebsgrößen ist eine Regelung der Pumpen und Motoren durch die Rechnereinheit ermöglicht.

In Ausgestaltung der Erfindung ist ein Arbeitsgerät von der Aufnahme des Trägergeräts aufgenommen, das wenigstens einen Hydraulikmotor umfasst, der über Leitungen mit der ersten Hydraulikhauptpumpe und/oder der zweiten Hydraulikhauptpumpe verbunden ist, wobei Sensoren zur Erfassung der Drehzahl und des Schluckvolumens des wenigstens einen Hydraulikmotors oder der Drehzahl und des Schluckvolumens wenigstens einer Hydraulikhauptpumpe und zur Erfassung von Drücken vor und/oder nach wenigstens einer Hydraulikhauptpumpe und/oder wenigstens eines Hydraulikmotors angeordnet sind, die mit der Rechnereinheit verbunden sind. Optimalerweise werden Drücke vor und nach der wenigstens einen Hydraulikhauptpumpe sowie vor und nach dem wenigstens einen Hydraulikmotor erfasst.

Bei einem offenen Hydraulikkreislauf ist mindestens der Druck nach der Pumpe zu erfassen, bei einem geschlossenen Kreislauf sind mindestens die Drücke vor und nach der Pumpe erforderlich.

Hierdurch ist über die Rechnereinheit die aktuell erforderliche hydraulische Leistung bestimmbar, die sich aus dem Differenzdruck an den Hydraulikmotoren und dem Volumenstrom der Pumpen, der sich aus Drehzahl und Schluckvolumina der Pumpen ergibt, zuzüglich der Verluste im Kreislauf ermitteln lässt. Die Verluste im Kreislauf ergeben sich aus dem Volumenstrom und der Druckdifferenz zwischen Pumpe und Eingangsdruck am Hydraulikmotor sowie dem Ausgangsdruck des Hydraulikmotors und dem Volumenstrom. Die Verluste, d.h. die Leistungsverluste im System können über Volumenströme und Druckverluste gemessen werden oder in der Rechnereinheit hinterlegt sein.

In weiterer Ausgestaltung der Erfindung weist wenigstens ein Hydraulikmotor ein veränderbares Schluckvolumen auf, wobei der wenigstens eine Hydraulikmotor mit einer Steuereinheit verbunden ist, über welche die Drehzahl und das Schluckvolumen einstellbar ist und die mit der Rechnereinheit verbunden ist. Hierdurch ist eine leistungsabhängige Steuerung des Hydraulikmotors bei minimal erforderlichem Volumenstrom ermöglicht, wodurch die Energieeffizienz erhöht ist.

Der vorliegenden Erfindung liegt weiterhin die Aufgabe zu Grunde, ein Verfahren zum Betrieb eines Spezialtiefbaugeräts, insbesondere Ramm- oder Bohrgerätes bereitzustellen, das insbesondere bei geringeren von einem angeordneten Arbeitsgerät abgerufenen Leistungen einen höheren Wirkungsgrad ermöglicht. Gemäß der Erfindung wird diese Aufgabe durch die Merkmale des kennzeichnenden Teils des Patentanspruchs 16 gelöst. Dadurch, dass die wenigstens zwei Hydraulikhauptpumpen jeweils über einen Elektromotor angetrieben werden, wobei wenigstens zwei Hydraulikhauptpumpen der wenigstens zwei Hydraulikhauptpumpen auch bei Zusammenführung der von diesen erzeugten Hydraulikölvolumenströme unabhängig voneinander mit unterschiedlicher Drehzahl betrieben werden, ist eine Reduzierung von Schleppleistungen ermöglicht, wodurch die Energieeffizienz des Spezialtiefbaugerätes erhöht ist.

In Weiterbildung der Erfindung wird für die einzelnen Elektromotoren in Abhängigkeit von einem vorgegebenen Druck oder einer vorgegebenen Leistung anhand von Kennlinienfeldern die für einen optimalen Wirkungsgrad der Elektromotoren und der von diesen angetriebenen Hydraulikhauptpumpen erforderliche Drehzahl ermittelt wird, mit der diese betrieben werden. Hierdurch ist ein effizienter Betrieb der Elektromotoren erzielt, wodurch der Wirkungsgrad des Spezialtiefbaugerätes weiter erhöht ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

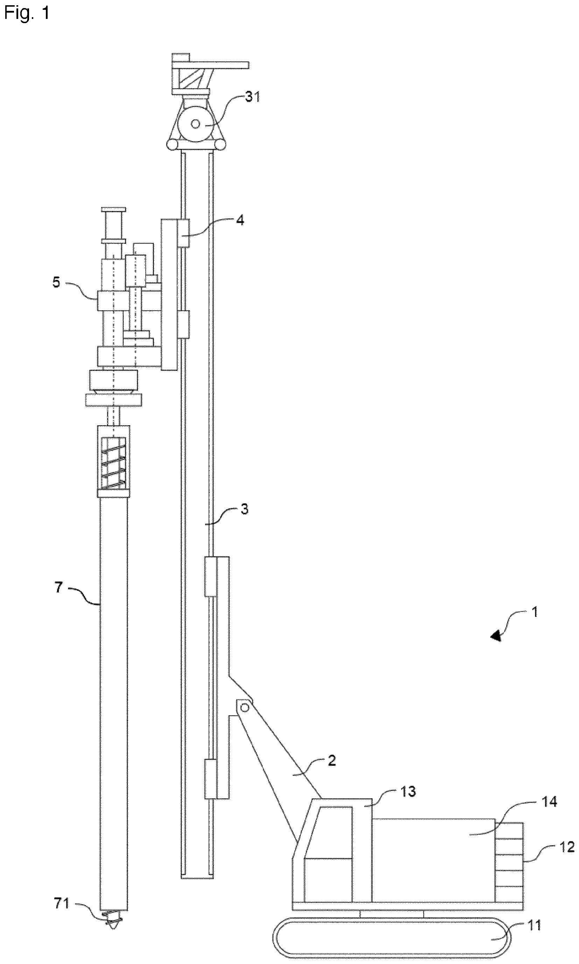

- Fig. 1: die schematische Darstellung einer VDW-Bohranlage mit Teleskopmäkler-Trägergerät;

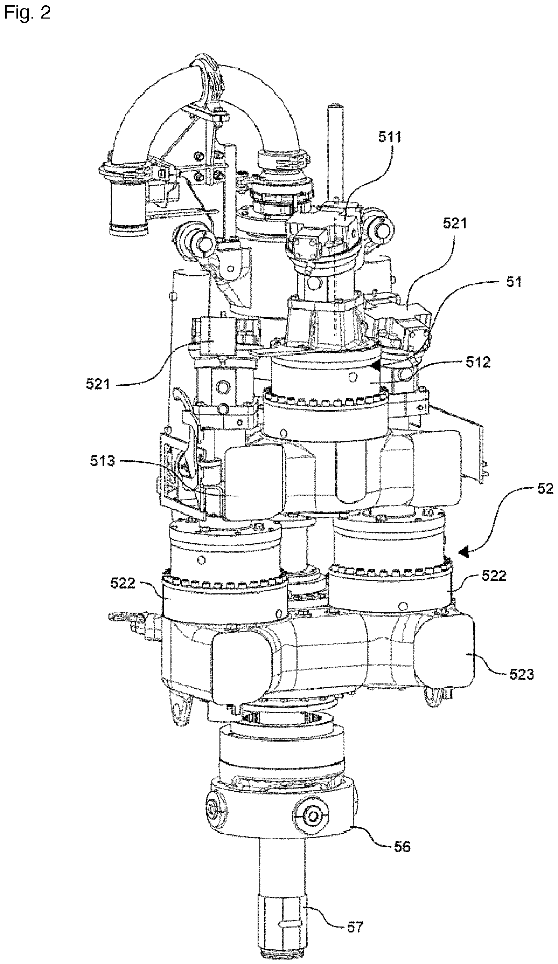

- Fig. 2: die schematische Darstellung des Doppelkopfbohrgerätes der VDW-Bohranlage aus Figur 1 im Teilschnitt;
- Fig. 3: die schematische Darstellung der hydraulischen Verschaltung der Motoren des Doppelkopfbohrgerätes aus Figur 2 mit zwei separaten Ölvolumenströmen;
- Fig. 4: die schematische Darstellung der hydraulischen Verschaltung der Hydraulikhauptpumpen des Trägergerätes der Drehbohranlage aus Figur 1;
- Fig. 5: die schematische Darstellung der hydraulischen Verschaltung der Hydraulikhauptpumpen des Trägergerätes einer Drehbohranlage in einer zweiten Ausführungsform;
- Fig. 6: die schematische Darstellung der hydraulischen Verschaltung der Hydraulikhauptpumpen des Trägergerätes einer Drehbohranlage in dritten weiteren Ausführungsform;
- Fig. 7: die schematische Darstellung der hydraulischen Verschaltung der Hydraulikhauptpumpen des Trägergerätes einer Drehbohranlage in einer vierten Ausführungsform;
- Fig. 8: die schematische Darstellung einer Vibrationsrammanlage mit Trägergerät;
- Fig. 9: die schematische Darstellung der Getriebezelle des Vibrationsrammgerätes der Vibrationsrammanlage aus Figur 8;
- Fig. 10: die schematische Darstellung der Hydraulikführung der Motoren des Vibrationsrammgerätes aus Figur 9 mit gemeinsamen Ölvolumenstrom;
- Fig. 11: die schematische Darstellung der hydraulischen Verschaltung der Hauptpumpen des Trägergerätes der Vibrationsrammanlage aus Figur 8;
- Fig. 12: die schematische Darstellung der hydraulischen Verschaltung der Hydraulikhauptpumpen des Trägergerätes einer Vibrationsrammanlage in einer zweiten Ausführungsform;
- Fig. 13: die schematische Darstellung der hydraulischen Verschaltung der Hydraulikhauptpumpen des Trägergerätes einer Vibrationsrammanlage in dritten weiteren Ausführungsform;
- Fig. 14: die schematische Darstellung der hydraulischen Verschaltung der Hydraulikhauptpumpen des Trägergerätes einer Vibrationsrammanlage in einer vierten Ausführungsform;
- Fig. 15: die schematische Darstellung des Wirkungsgrad-Kennlinienfeldes der Hydraulikhauptpumpen des Trägergerätes aus Figur 1 in Abhängigkeit von Differenzdruck und Drehzahlverhältnis bei einem Verhältnis des eingestellten Schluckvolumens zum maximalen Schluckvolumen von 0,8;
- Fig. 16: die schematische Darstellung des Wirkungsgrad-Kennlinienfeldes der Hydraulikhauptpumpen des Trägergerätes aus Figur 1 in Abhängigkeit von Differenzdruck und Drehzahlverhältnis bei einem Verhältnis des eingestellten Schluckvolumens zum maximalen Schluckvolumen von 0,4 und
- Fig. 17: die schematische Darstellung des Wirkungsgrad-Kennlinienfeldes der Elektromotoren zum Antrieb der Hydraulikhauptpumpen des Trägergerätes aus Figur 1 in Abhängigkeit von Drehzahl und Drehmoment.

Die als Ausführungsbeispiel gewählte VDW-Drehbohranlage besteht im Wesentlichen aus einem Trägergerät 1, das über eine Kinematik 2 mit einem Mäkler 3 verbunden ist, an dem ein Arbeitsgeräteschlitten 4 verfahrbar angeordnet ist, der ein VDW Doppelkopfbohrgerät 5 aufnimmt.

Der Arbeitsgeräteschlitten 4 ist über - nicht dargestellte - im Inneren des Mäklers 3 angeordnete Hydraulikzylinder und über Seile, die über eine Umlenkrolle 31 geführt sind, entlang dem Mäkler 3 in beide Richtungen verschiebbar.

Das Trägergerät 1 umfasst einen mit einem Kettenfahrwerk versehenen Unterwagen 11, auf dem ein Oberwagen 12 drehbar angeordnet ist. Der Oberwagen 12 umfasst eine Fahrerkabine 13 sowie einen Maschinenraum 14, der eine Hydraulikeinheit 6 zur Bereitstellung der für den Betrieb des an dem Arbeitsgeräteschlitten 4 befestigten Arbeitsgerätes, vorliegend des VDW Doppelkopfbohrgerätes 5, aufnimmt. Weiterhin ist in dem Maschinenraum ein Dieselmotor zum Antrieb eines angeodneten Generators vorhanden, der mit einem Pufferakku verbunden ist. Der Pufferakku dient der Spannungsversorgung der Elektromotoren zum Antrieb der angeordneten Hydraulikhauptpumpen 61, 62 und Hydrauliknebenpumpen. Der Antrieb des Kettenfahrwerks des Unterwagens 11 erfolgt im Ausführungsbeispiel über wenigstens einem Hydraulikmotor, der von den Hydraulikölvolumenströmen der Hydraulikhauptpumpen 61, 62 betrieben ist. An Stelle eines Dieselmotors kann der Generator auch von einem sonstigen Verbrennungsmotor betrieben sein. Selbstverständlich kann zur Speisung des Pufferakkus mit einem Ladestrom auch eine Wasserstoff-Brennstoffzelle angeordnet sein.

Im Ausführungsbeispiel ist weiterhin eine - nicht dargestellte - Nebenhydraulikeinheit zur Versorgung von Nebenaggregaten des Trägergerätes 1 sowie ggf. Nebenaggregaten eines von dem Arbeitsgeräteschlitten 4 aufgenommenen Arbeitsgerätes vorhanden. Hierzu umfasst die Nebenhydraulikeinheit eine - nicht dargestellte - Hydrauliknebenpumpe, die mit einem Elektromotor verbunden ist, über den sie betrieben ist. Es können auch weitere Hydrauliknebenpumpen angeordnet sein, die über einzelne Elektromotoren oder auch einen gemeinsamen Elektromotor betrieben werden.

Die Hydraulikeinheit 6 umfasst im Ausführungsbeispiel eine als Konstantpumpe ausgebildete erste Hydraulikhauptpumpe 61, die mit einem ersten Elektromotor 611 betrieben ist und eine ebenfalls als Konstantpumpe ausgebildete zweite Hydraulikhauptpumpe 62, die mit einem zweiten Elektromotor 612 betrieben ist. Die Eingänge der beiden Hydraulikhauptpumpen 61, 62 sind über Zugangsleitungen 63 mit einem Hydrauliktank 69 verbunden, über den sie mit Hydrauliköl gespeist sind. Ausgangsseitig sind die Hydraulikhauptpumpen 61, 62 über Ausgangsleitungen 64, 65 mit Hydraulikbuchsen eines an dem Arbeitsgeräteschlitten 4 angeordneten - nicht dargestellten - Hydraulikkupplungsblocks verbunden. Der - nicht dargestellte - Hydraulikkupplungsblock dient der Verbindung der Hydraulikleitungen eines von dem Arbeitsgeräteschlitten aufgenommenen Arbeitsgerätes (Zulauf- und Rücklaufleitungen) mit den Hydraulikleitungen der Hydraulikeinheit 6 des Trägergerätes 1 (Ausgangs- und Rücklaufleitungen).

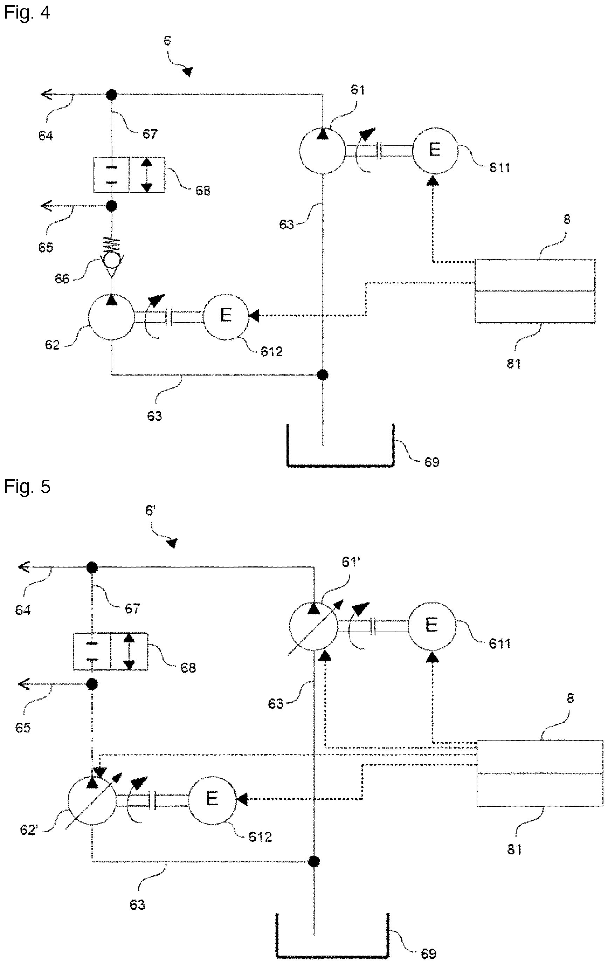

Im Ausführungsbeispiel ist hinter der zweiten Hydraulikhauptpumpe 62 ausgangsseitig ein Rückschlagventil 66 angeordnet. Weiterhin sind die Ausgangsleitungen 64, 65 zwischen den beiden Hydraulikhauptpumpen 61, 62 und dem - nicht dargestellten - Hydraulikkupplungsblock über eine Verbindungsleitung 67 miteinander verbunden, in der ein 2/2-Wegeventil 68 angeordnet ist (vgl. Fig. 4). Das 2/2-Wegeventil 68 ist derart eingestellt, dass die Verbindungsleitung 67 unterbrochen ist. In dieser Stellung werden durch die Pumpen 61, 62 zwei unabhängige Volumenströme über die beiden Ausgangsleitungen 64, 65 erzeugt.

Die Hydraulikhauptpumpen 61, 62 sind mit einer Steuereinheit 8 verbunden, über die sie angesteuert werden. Die Steuerung der Steuereinheit 8 ist darauf ausgelegt, bei vorgegebenem Ölvolumenstrom und vorgegebenem Druck oder bei vorgegebener Leistung für Druck und Volumenstrom einen optimalen Wirkungsgrad zu erreichen. Hierzu ist die Steuereinheit 8 mit einer Rechnereinheit 81 verbunden, in der für die beiden Hydraulikhauptpumpen 61, 62 Kennfelder hinterlegt sind, die von dem ebenfalls hinterlegten Kennfeld des zugeordneten Elektromotors 611, 621 überlagert werden. Bei der vorliegenden Hydraulikeinheit 6 ergibt sich in dem zweidimensionalen Kennfeld der beiden als Konstantpumpe ausgebildeten Hydraulikhauptpumpen 61, 62 der Wirkungsgrad abhängig von Drehzahl und Druckdifferenz. Die Kennfelder der Elektromotoren 611, 621 werden von Drehzahl und Drehmoment bestimmt. Für jede Kombination aus Druck und Volumenstrom ergibt sich so eine energetisch optimale Einstellung hinsichtlich der Drehzahlen beider Pumpen (bei ggf. Abschaltung der Hydraulikhauptpumpe 62 (Drehzahl gleich Null), und Umschaltung des 2/2-Wegeventils 68 auf "Durchlass"). Bei Abschaltung der Hydraulikhauptpumpe 62 verhindert das Rückschlagventil 66, dass die Hydraulikhauptpumpe 62 rückwärts gedreht wird.

Die Rechnereinheit 81 ist weiterhin mit - nicht dargestellten - Sensoren zur Erfassung des Schwenkwinkels, der Drehzahl sowie des Drucks der Hydraulikhauptpumpen 61, 62 verbunden. Anstelle der Sensoren zur Erfassung des Schwenkwinkels kann auch der Volumenstrom erfasst und der Schwenkwinkel aus Volumenstrom und Drehzahl ermittelt werden. Der Volumenstrom kann auch aus Schluckvolumen und Drehzahl der Hydraulikmotoren (511, 521, 93) des von dem Arbeitsgeräteschlitten 4aufgenommenen Arbeitsgerätes errechnet werden. Am genauesten ist die direkte Erfassung von Schluckvolumen und Drehzahl über eine Sensorik.

Das VDW Doppelkopfbohrgerät 5 umfasst zwei koaxial angeordnete Drehantriebe 51, 52, die einzeln hydraulisch angetrieben werden und beim Bohren mit gegenläufigen Drehrichtungen betrieben werden können. Der erste Drehantrieb 51 umfasst einen ersten Hydraulikmotor 511, der mit einem ersten Planetengetriebe 512 verbunden ist. Das erste Planetengetriebe 512 treibt ein erstes Stirnradradgetriebe 513 an, das mit einer Bohrschneckenaufnahme 57 verbunden ist. Der zweite Drehantrieb 52 umfasst zwei parallel geschaltete zweite Hydraulikmotoren 521, die jeweils mit einem zweiten Planetengetriebe 522 verbunden sind. Die beiden zweiten Planetengetriebe 522 treiben ein zweites Stirnradradgetriebe 523 an, das mit einer die Bohrschneckenaufnahme 57 umschließenden Bohrrohraufnahme 56 verbunden ist.

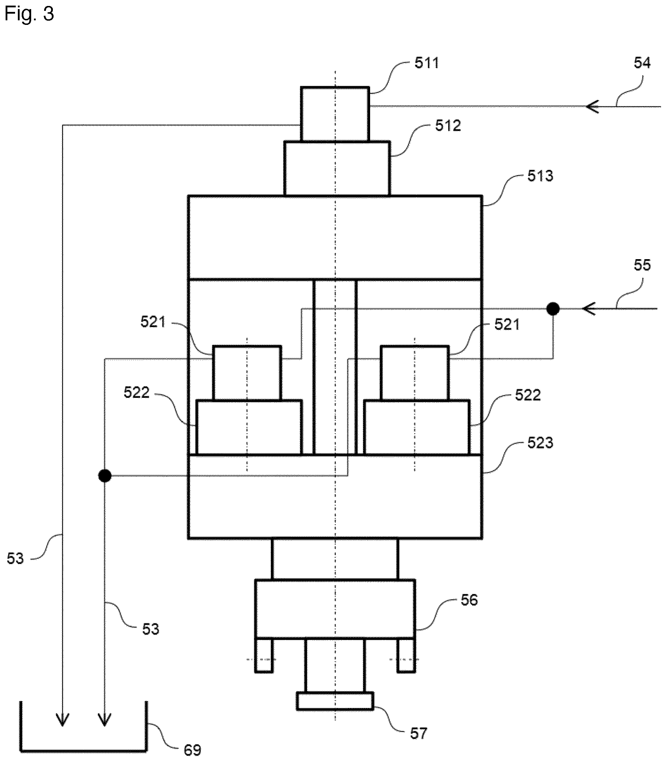

Die Hydraulikmotoren 511, 521 jeweils eines Drehantriebs 51, 52 sind über jeweils eine Zulaufleitung 54, 55 mit jeweils einer Ausgangsleitung 64, 65 der Hydraulikeinheit 6 verbunden. Hierzu sind die Zulaufleitungen 54, 55 mit den zugeordneten Hydraulikbuchsen des an dem Arbeitsgeräteschlitten 4 des Mäklers 3 des Trägergerätes 1 angeordneten - nicht dargestellten - Hydraulikkupplungsblocks verbunden. Der erste Hydraulikmotor 511 wird so mit dem Volumenstrom der ersten Hydraulikhauptpumpe 61 gespeist, die beiden parallel geschalteten zweiten Hydraulikmotoren 521 werden mit dem Volumenstrom der zweiten Hydraulikhauptpumpe 62 gespeist, der sich auf diese aufteilt. Ausgangsseitig sind die Hydraulikmotoren 511, 521 über Rücklaufleitungen 53 mit dem Hydrauliktank 69 des Trägergerätes 1 verbunden, die ebenfalls über den - nicht dargestellten - Kupplungsblock geführt sind (vgl. Figur 3).

Das VDW Doppelkopfbohrgerät 5 ist dafür vorgesehen, ein Bohrrohr 7 und eine darin befindliche Schnecke 71 unabhängig voneinander, mit unterschiedlichen Drehmomenten, unterschiedlichen Geschwindigkeiten und auch unterschiedlicher Drehrichtung anzutreiben. Mit dem Abtrieb des oberen, ersten Drehantriebs 51 wird die Schnecke 71 gedreht, mit dem unteren, zweiten Drehantrieb 52 das Bohrrohr 7.

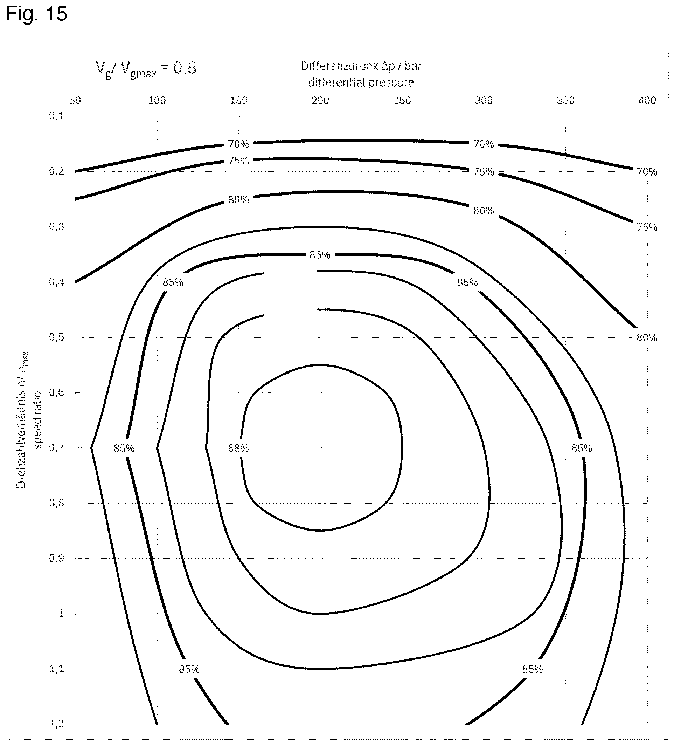

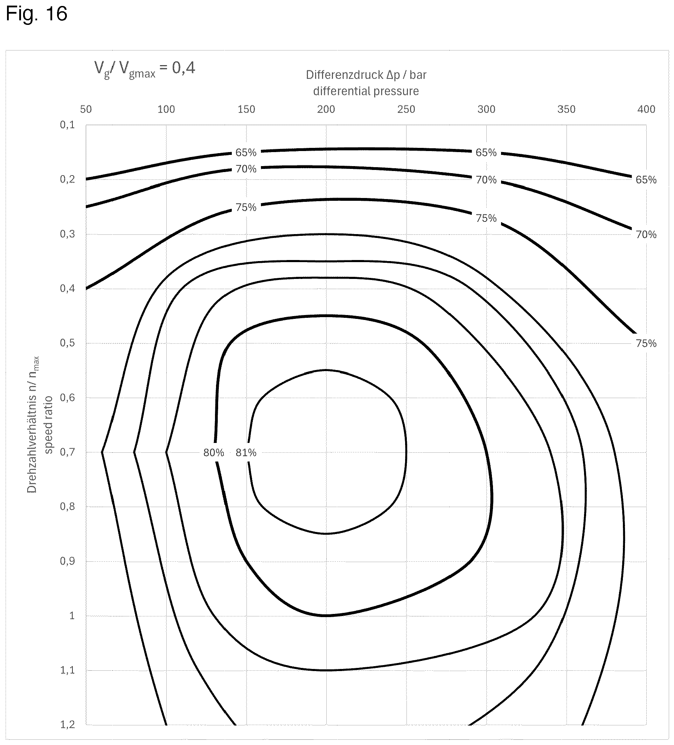

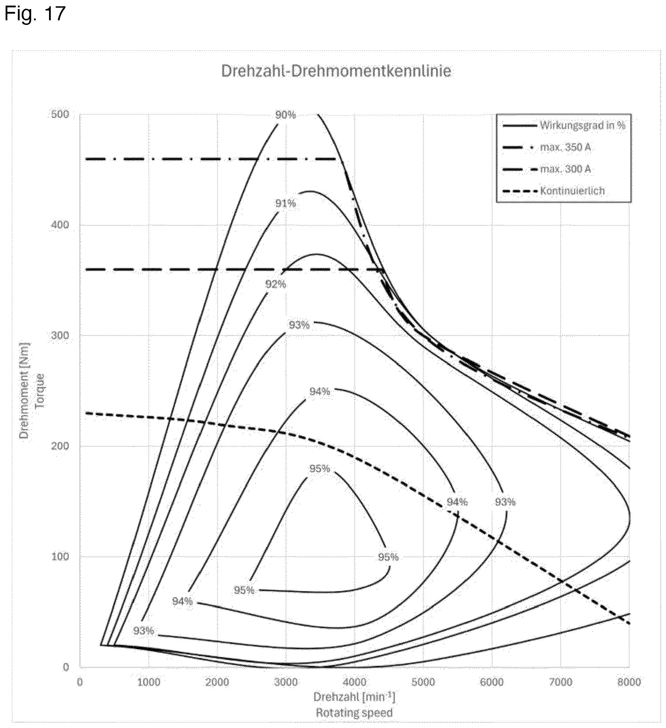

In Figur 5 eine weitere Ausgestaltung der Hydraulikeinheit 6' des Trägergerätes 1 der vorstehenden VDW-Drehbohranlage gezeigt. Hierbei sind die beiden Hydraulikhauptpumpen 61', 62' als Verstellpumpen mit verstellbarem Schluckvolumen ausgebildet und mit der Steuereinheit 8 verbunden. Für diese Verstellpumpen ist in der Rechnereinheit 81 ein dreidimensionales Kennfeld hinterlegt, in dem sich der Wirkungsgrad abhängig von Drehzahl, Druckdifferenz und Schluckvolumen ergibt (vgl. Figuren 15 und 16). Diese Kennfelder werden wiederum überlagert vom Kennfeld des jeweiligen Elektromotors 611, 612 (vgl. Figur 17: die durchgezogenen Linien zeigen in einem Muscheldiagramm den Wirkungsgrad. Die anderen Kennlinien zeigen Obergrenzen für 350 A, 300 A und thermisch mögliche Dauerbelastung). Für jede Kombination aus Druck und Volumenstrom ergibt sich hier eine energetisch optimale Einstellung hinsichtlich der Drehzahlen sowie der einzustellenden Schluckvolumina beider Hydraulikhauptpumpen 61', 62' (wiederum bei ggf. Abschaltung der Hydraulikhauptpumpe 61 und Verstellung des 2/2-Wegeventils 68. Ein Rückschlagventil ist hier aufgrund der Möglichkeit der Verstellung des Schluckvolumens auf Null nicht erforderlich.

Diese Ausgestaltung der Hydraulikeinheit 6' ermöglicht eine Einstellung der beiden Volumenströme über Pumpendrehzahl und/oder Schluckvolumen. Für von zum Einsatz kommende Arbeitsgeräte, die zum Betrieb nur einen Volumenstrom benötigen, wie Vibrationsrammgeräte, kann für kleine Volumenströme bei Verstellung des 2/2-Wegeventils 68 auf "Durchlass" eine der Hydraulikhauptpumpen 61', 62' auf Schluckvolumen Null geschwenkt werden. Hierdurch sind sehr kleine Volumenströme realisierbar.

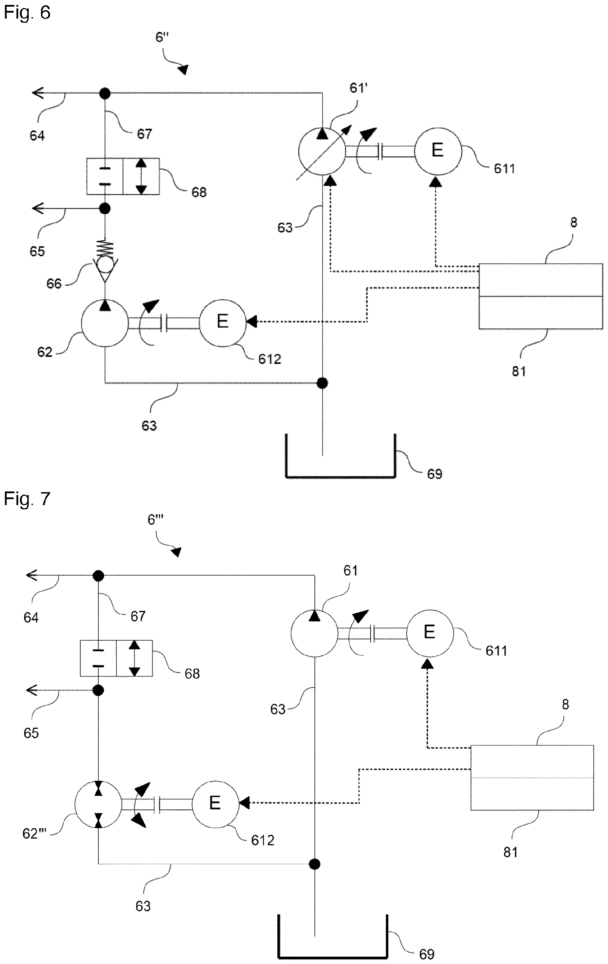

In Figur 6 eine dritte Ausgestaltung der Hydraulikeinheit 6" des Trägergerätes 1 gezeigt. Die Hydraulikeinheit 6" entspricht im Wesentlichen der Hydraulikeinheit 6 gemäß dem ersten Ausführungsbeispiel, wobei die erste Hydraulikhauptpumpe 61' als Verstellpumpe ausgebildet ist. Diese Ausführungsform erweist sich bei großen Volumenströmen etwas effizienter als die die Variante gemäß Figur 5 und bietet bei Einsatz eines Vibrationsrammgerätes (9) als Arbeitsgerät die Möglichkeit der Realisierung von sehr kleinen Volumenströmen bei Zusammenschaltung der beiden Hydraulikhauptpumpen (61', 62') in einem gemeinsamen Hydraulikkreislauf.

In Figur 7 ist eine vierte Ausgestaltung der Hydraulikeinheit 6‴ des Trägergerätes 1 gezeigt. Die Hydraulikeinheit 6‴ entspricht im Wesentlichen der Hydraulikeinheit 6 gemäß dem ersten Ausführungsbeispiel, wobei die zweite Hydraulikhauptpumpe 62‴ als in beide Richtungen fördernde Konstantpumpe ausgebildet ist. Ein Rückschlagventil ist hier nicht erforderlich. Im Gegensatz zu dem ersten Ausführungsbeispiel gemäß Figur 4 können sehr kleine Volumenströme realisiert werden, indem die zweite Hydraulikhauptpumpe 62‴ rückwärts fördert. Nachteilig ist hier jedoch ein relativ schlechter Wirkungsgrad, da beide Hydraulikhauptpumpen 61, 62‴ und beide Elektromotoren 611, 622 laufen (der zweite Elektromotor 621 läuft dabei im Generatorbetrieb) und Verluste verursachen, die bezogen auf den Volumenstrom hoch sein können. Diese Ausgestaltung eignet sich besonders für Arbeitsgeräte, die zum Betrieb nur einen Volumenstrom benötigen, wie Vibrationsrammgeräte.

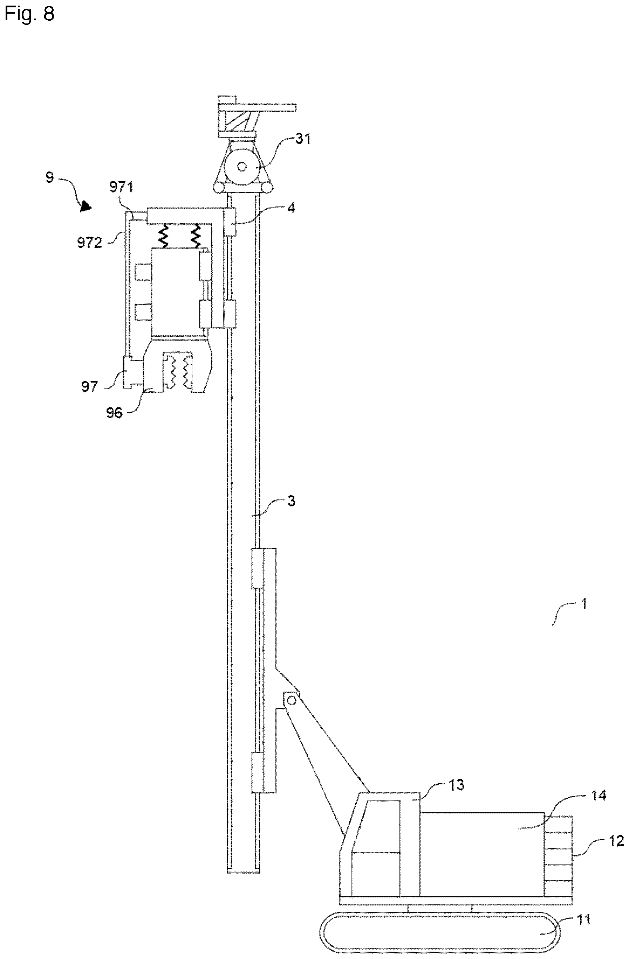

Die als weiteres Ausführungsbeispiel gewählte Vibrationsrammanlage gemäß Figur 8 besteht im Wesentlichen aus dem Trägergerät 1 der vorstehend beschriebenen VDW-Drehbohranlage, dessen Arbeitsgeräteschlitten 4 anstatt des Doppelkopfbohrgerätes hier ein Vibrationsrammgerät 9 aufnimmt.

Das Vibrationsrammgerät 9 umfasst einen Schwingungserzeuger 91, der in Figur 3 gezeigt ist. Der Schwingungserzeuger 91 umfasst ein Gehäuse 92, in dem in bekannter Art und Weise ein Erregergetriebe angeordnet ist, wie es beispielsweise in der EP 1 976 292 B1 oder auch der EP 2 085 149 B1 beschrieben ist. Das - nicht dargestellte - Erregergetriebe umfasst im Ausführungsbeispiel drei mit Unwuchten versehene Wellen, von denen zwei Wellen aus dem Gehäuse 92 herausgeführt sind und jeweils mit einem Hydraulikmotor 93 verbunden sind, über den sie angetrieben werden. An dem Gehäuse 32 ist in bekannter Art und Weise eine Klemmzange 96 zur Aufnahme eines Rammgutes, beispielsweise einer Spundwandbohle angeordnet. Die Klemmzange 96 weist einem Hydraulikzylinder 97 auf, über den ihre Spannbacken gegeneinander verschiebbar sind. Der Hydraulikzylinder 97 ist über eine Zulaufleitung 971 und eine Rücklaufleitung 972 über den an dem Arbeitsgeräteschlitten 4 des Trägergerätes 1 angeordneten - nicht dargestellten - Hydraulikkupplungsblock mit der - nicht dargestellten - Nebenhydraulikeinheit des Trägergerätes 1 verbunden.

Die beiden Hydraulikmotoren 93 des Schwingungserzeugers 91 sind mechanisch und hydraulisch gekoppelt und werden von der Hydraulikeinheit 6 mit einem Volumenstrom versorgt. Durch die Verbindung der Ausgangsleitungen 64, 65 durch die Verbindungsleitung 76 ist sichergestellt, dass sich der Volumenstrom so auf die beiden Zulaufleitungen 94 des Schwingungserzeugers 91 aufteilt, dass sich ein Minimum an Druckverlusten ergibt. Üblicherweise, bei identischer Ausgestaltung der Zulaufleitungen 94, fließt in den Leitungen der identische Teilvolumenstrom (unter der Voraussetzung, dass beide Hydraulikmotoren 93 das gleiche Schluckvolumen aufweisen und Unwuchtwellen mit identischer Übersetzung antreiben).

Eine Verbindung der beiden Zulaufleitungen, wie sie in diesem Ausführungsbeispiel vorhanden ist, ist besonders dann sinnvoll, wenn die beiden Hydraulikmotoren 93 (es können auch mehr aus zwei Hydraulikmotoren angeordnet sein) mit unterschiedlichen Schluckvolumina arbeiten, beispielsweise als unterschiedlich große Konstantmotoren ausgebildet sind, die Hydraulikmotoren die Unwuchten des - nicht dargestellten - Erregergetriebes mit unterschiedlicher Übersetzung antreiben oder auch, wenn Konstant- und Verstellmotoren kombiniert werden. Dann dient die Verbindung zwischen den Vorlaufleitungen dazu, die Volumenströme in den einzelnen Zulaufleitungen 94 anzupassen und die geringstmöglichen Strömungsverluste sicherzustellen.

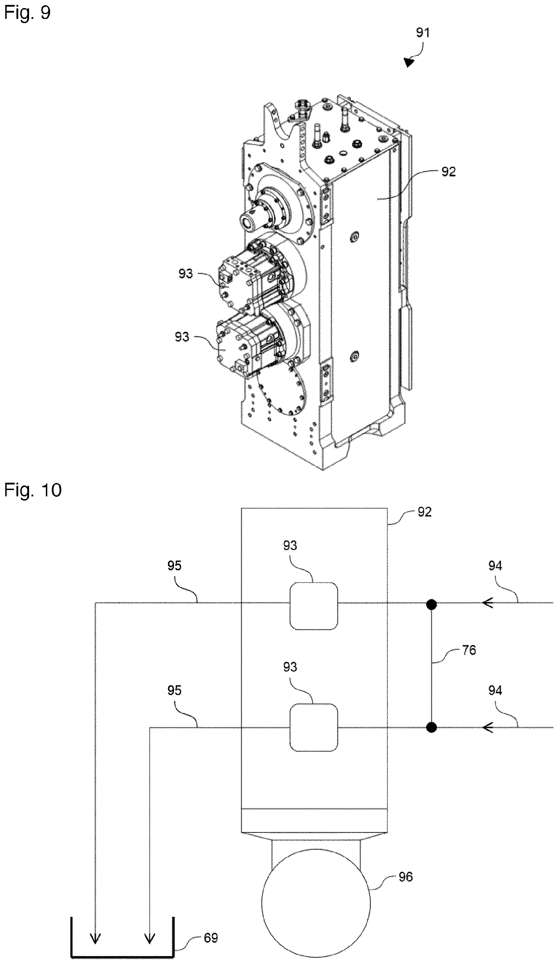

In Figur 10 ist die Hydraulikführung der Hydraulikmotoren 93 gezeigt. Die Hydraulikmotoren 93 sind über zwei miteinander verbundene Zulaufleitungen 94 mit den Ausgangsleitungen 64, 65 der Hydraulikeinheit 6 des Trägergerätes verbunden. Hierzu sind die Zulaufleitungen 94 mit den zugeordneten Hydraulikbuchsen des an dem Arbeitsgeräteschlitten 4 des Mäklers 3 des Trägergerätes 1 angeordneten - nicht dargestellten - Hydraulikkupplungsblocks verbunden. Das 2/2-Wegeventil 68 der Hydraulikeinheit 6 des Trägergerätes 1 ist auf "Durchlauf" gestellt. Durch die Rücklaufleitungen 95 wird das Hydrauliköl über den - nicht dargestellten - an dem Arbeitsgeräteschlitten 4 des Trägergerätes 1 angeordneten Hydraulikkupplungsblock zurück zum Hydrauliktank 69 geleitet.

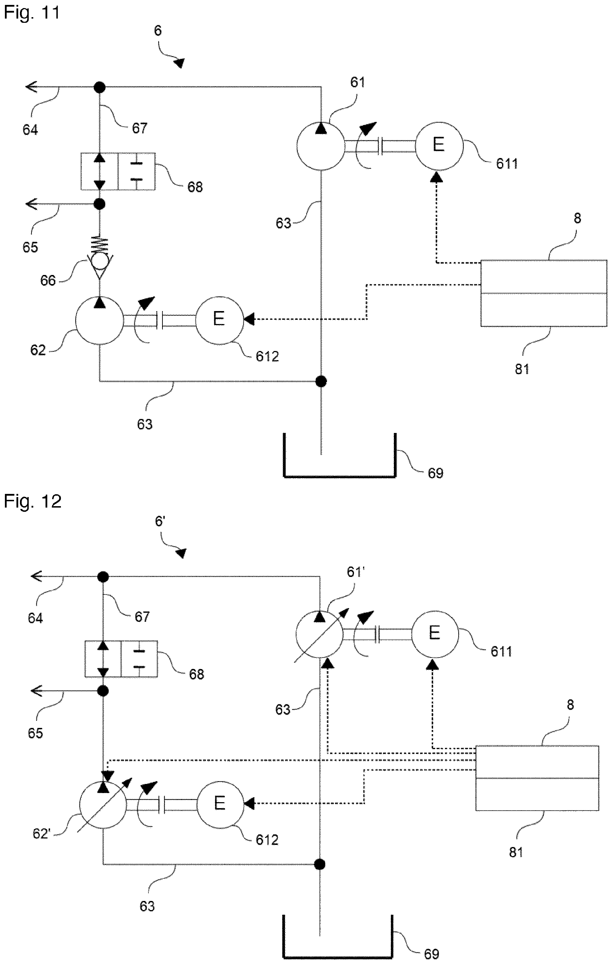

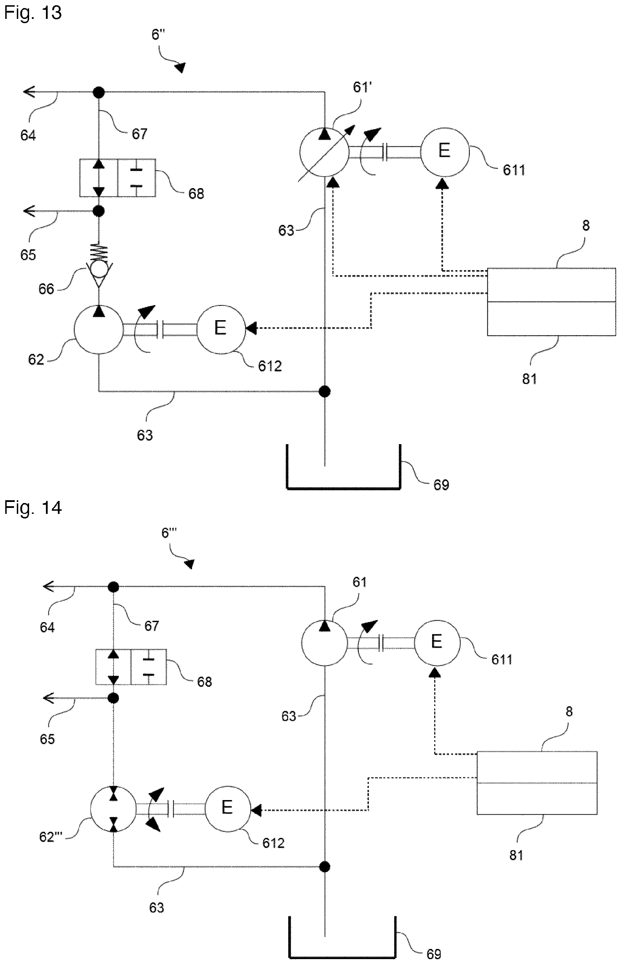

Bei der Vibrationsrammanlage kann das Trägergerät 1, wie oben im Zusammenhang mit der VDW-Drehbohranlage beschrieben, mit unterschiedlichen Ausgestaltungen der Hydraulikeinheit 6 versehen sein. Bei der vorliegenden Verwendung dieses Trägergerätes 1 zum Einsatz mit einer Vibrationsramme 9 ist die Hydraulikeinheit 6 bei allen Ausgestaltungen in den Rammbetrieb versetzt, wobei das 2/2-Wegeventil 68 in "Durchlassposition" gestellt wird, wodurch die beiden Ausgangsleitungen 64, 65 über die Verbindungsleitung 67 gekoppelt sind. Die verschiedenen Ausgestaltungen der Hydraulikeinheit 6 im Rammbetrieb sind in den Figuren 11 bis 14 gezeigt.

## Patentansprüche

1. Spezialtiefbaugerät, insbesondere Ramm- oder Bohrgerät, umfassend ein Trägergerät (1), an dem eine Aufnahme für ein hydraulisches Arbeitsgerät angeordnet ist, sowie zwei Hydraulikhauptpumpen (61, 62) zur Bereitstellung wenigstens eines Hydraulikölvolumenstroms zum Betrieb eines aufgenommenen Arbeitsgerätes, die über Leitungen (63, 64, 65) mit der Aufnahme verbunden sind, **dadurch gekennzeichnet, dass** eine erste der Hydraulikhauptpumpen (61) durch einen mit dieser verbundenen ersten Motor und die zweite der Hydraulikhauptpumpen (62) durch einen separaten, mit dieser verbundenen zweiten Motor angetrieben ist.

2. Spezialtiefbaugerät nach Anspruch 1, **dadurch gekennzeichnet, dass** das Trägergerät (1) ein Fahrwerk aufweist, das von wenigstens einem Hydraulikmotor angetrieben ist, der von den beiden Volumenströmen der beiden Hydraulikhauptpumpen (61, 62) gespeist ist.

3. Spezialtiefbaugerät nach Anspruch 1 oder 2, **dadurch gekennzeichnet, dass** wenigstens eine Hydrauliknebenpumpe zur Bereitstellung wenigstens eines Hydraulikölvolumenstroms zum Betrieb von Nebenaggregaten angeordnet ist.

4. Spezialtiefbaugerät nach einem der vorgenannten Ansprüche, **dadurch gekennzeichnet, dass** das Trägergerät (1) einen Mäkler (3) aufweist, an dem ein Arbeitsgeräteschlitten (4) verschiebbar angeordnet ist, der die Aufnahme für ein Arbeitsgerät aufweist.

5. Spezialtiefbaugerät nach einem der vorgenannten Ansprüche, **dadurch gekennzeichnet, dass** die erste Hydraulikhauptpumpe (61) und/oder die zweite Hydraulikhauptpumpe (62) als Konstantpumpe ausgebildet ist, deren Pumpenausgang vorzugsweise mit einem Rückschlagventil (66) versehen ist.

6. Spezialtiefbaugerät nach einem der vorgenannten Ansprüche, **dadurch gekennzeichnet, dass** die erste Hydraulikhauptpumpe (61) und/oder die zweite Hydraulikhauptpumpe (62) ein verstellbares Schluckvolumen aufweist.

7. Spezialtiefbaugerät nach einem der vorgenannten Ansprüche, **dadurch gekennzeichnet, dass** der erste Motor und der zweite Motor mit einer Steuereinheit (8) verbunden sind, über die sie unabhängig voneinander ansteuerbar sind, wobei der erste Motor und/oder der zweite Motor durch einen Elektromotor (611, 621) gebildet ist.

8. Spezialtiefbaugerät nach einem der Ansprüche 3 bis 7, **dadurch gekennzeichnet, dass** wenigstens eine der wenigstens einen Nebenhydraulikpumpe über einen separaten, dritten Motor angetrieben ist, der vorzugsweise durch einen Elektromotor gebildet ist.

9. Spezialtiefbaugerät nach Anspruch 8, **dadurch gekennzeichnet, dass** mehrere Nebenhydraulikpumpen angeordnet sind, die in wenigstens zwei Gruppen zusammengefasst sind, von denen wenigstens eine Gruppe über einen gemeinsamen Motor, vorzugsweise einen Elektromotor angetrieben ist.

10. Spezialtiefbaugerät nach einem der Ansprüche 7 bis 9, **dadurch gekennzeichnet, dass** eine Rechnereinheit (81) angeordnet ist, die mit der Steuereinheit (8) verbunden ist und die eingerichtet ist, bei vorgegebenem Druck und Volumenstrom oder bei vorgegebener Leistung die Drehzahl des ersten Motors und die Drehzahl des zweiten Motors zu bestimmen, bei denen der beste Wirkungsgrad erzielt ist.

11. Spezialtiefbaugerät nach Anspruch 10, **dadurch gekennzeichnet, dass** in der Rechnereinheit (81) ein mindestens ein zwei- oder dreidimensionales Kennfeld hinterlegt ist, aus dem sich der Wirkungsgrad in Abhängigkeit zumindest von Drehzahl und Druckdifferenz ergibt und anhand dessen die Ermittlung der Drehzahlen des ersten Motors und des zweiten Motors erfolgt.

12. Spezialtiefbaugerät nach Anspruch 11, **dadurch gekennzeichnet, dass** in der Rechnereinheit (81) ein Kennfeld des ersten und ein Kennfeld des zweiten Motors hinterlegt ist, aus denen sich der Wirkungsgrad des jeweiligen Motors aus Drehzahl und Drehmoment ergibt, wobei die Ermittlung der Drehzahlen des ersten Motors und des zweiten Motors anhand der hinterlegten Kennfelder aller Motoren erfolgt.

13. Spezialtiefbaugerät nach einem der Ansprüche 7 bis 12, **dadurch gekennzeichnet, dass** Sensoren zur Erfassung des Volumenstroms und des Drucks wenigstens eines Hydraulikkreislaufs einer Hydraulikhauptpumpe (61, 62) und/oder Sensoren zur Erfassung der Drehzahl und/oder des Drucks und/oder des Schluckvolumens wenigstens einer Hydraulikhauptpumpe (61, 62) angeordnet sind, die mit der Rechnereinheit (81) verbunden sind.

14. Spezialtiefbaugerät nach einem der Ansprüche 7 bis 12, **dadurch gekennzeichnet, dass** ein Arbeitsgerät von der Aufnahme des Trägergeräts (1) aufgenommen ist, das wenigstens einen Hydraulikmotor (511, 521, 93) umfasst, der über Leitungen (53, 54, 55, 94, 95) mit der ersten Hydraulikhauptpumpe (61) und/oder der zweiten Hydraulikhauptpumpe (62) verbunden ist, wobei Sensoren zur Erfassung der Drehzahl und des Schluckvolumens des wenigstens einen Hydraulikmotors (511, 521, 93) oder der Drehzahl und des Schluckvolumens der wenigstens einer Hydraulikhauptpumpe (61, 62) und zur Erfassung von Drücken vor und/oder nach wenigstens einer Hydraulikhauptpumpe (61, 62) und/oder wenigstens eines Hydraulikmotors (511, 521, 93) angeordnet sind, die mit der Rechnereinheit (81) verbunden sind.

15. Spezialtiefbaugerät nach Anspruch 14, **dadurch gekennzeichnet, dass** wenigstens ein Hydraulikmotor (511, 521, 93) ein veränderbares Schluckvolumen aufweist, wobei der wenigstens eine Hydraulikmotor (511, 521, 93) mit einer Steuereinheit (8) verbunden ist, über welche die Drehzahl und das Schluckvolumen einstellbar ist und die mit der Rechnereinheit (81) verbunden ist.

16. Verfahren zum Betrieb eines Spezialtiefbaugerätes nach einem der vorgenannten Ansprüche, insbesondere Ramm- oder Bohrgerätes mit einem hydraulischen Arbeitsgerät, das über wenigstens zwei Hydraulikhauptpumpen (61, 62) mit Hydrauliköl gespeist wird, **dadurch gekennzeichnet, dass** die wenigstens zwei Hydraulikhauptpumpen (61, 62) jeweils über einen Elektromotor (611, 621) angetrieben werden, wobei wenigsten zwei der wenigstens zwei Hydraulikhauptpumpen (61, 62) auch bei Zusammenführung der von diesen erzeugten Hydraulikölvolumenströmen unabhängig voneinander mit unterschiedlicher Drehzahl betrieben werden.

17. Verfahren nach Anspruch 16, **dadurch gekennzeichnet, dass** für die einzelnen Elektromotoren (611, 621) in Abhängigkeit von einem vorgegebenen Druck oder einer vorgegebenen Leistung anhand von Kennlinienfeldern die für einen optimalen Wirkungsgrad der Elektromotoren (611, 621) und der von diesen angetriebenen Hydraulikhauptpumpen (61, 62) erforderliche Drehzahl ermittelt wird, mit der diese betrieben werden.

## Geänderte Patentansprüche

### Geänderte Patentansprüche gemäss Regel 137(2) EPÜ.

1. Spezialtiefbaugerät, insbesondere Ramm- oder Bohrgerät, umfassend ein Trägergerät (1), an dem eine Aufnahme für ein hydraulisches Arbeitsgerät angeordnet ist, sowie zwei Hydraulikhauptpumpen (61, 62) zur Bereitstellung wenigstens eines Hydraulikölvolumenstroms zum Betrieb eines aufgenommenen Arbeitsgerätes, die über Leitungen (63, 64, 65) mit der Aufnahme verbunden sind, **dadurch gekennzeichnet, dass** eine erste der Hydraulikhauptpumpen (61) durch einen mit dieser verbundenen ersten Motor und die zweite der Hydraulikhauptpumpen (62) durch einen separaten, mit dieser verbundenen zweiten Motor angetrieben ist, wobei das Trägergerät (1) ein Fahrwerk aufweist, das von wenigstens einem Hydraulikmotor angetrieben ist, der von den beiden Volumenströmen der beiden Hydraulikhauptpumpen (61, 62) gespeist ist.

2. Spezialtiefbaugerät nach Anspruch 1, **dadurch gekennzeichnet, dass** wenigstens eine Hydrauliknebenpumpe zur Bereitstellung wenigstens eines Hydraulikölvolumenstroms zum Betrieb von Nebenaggregaten angeordnet ist.

3. Spezialtiefbaugerät nach einem der vorgenannten Ansprüche, **dadurch gekennzeichnet, dass** das Trägergerät (1) einen Mäkler (3) aufweist, an dem ein Arbeitsgeräteschlitten (4) verschiebbar angeordnet ist, der die Aufnahme für ein Arbeitsgerät aufweist.

4. Spezialtiefbaugerät nach einem der vorgenannten Ansprüche, **dadurch gekennzeichnet, dass** die erste Hydraulikhauptpumpe (61) und/oder die zweite Hydraulikhauptpumpe (62) als Konstantpumpe ausgebildet ist, deren Pumpenausgang vorzugsweise mit einem Rückschlagventil (66) versehen ist.

5. Spezialtiefbaugerät nach einem der vorgenannten Ansprüche, **dadurch gekennzeichnet, dass** die erste Hydraulikhauptpumpe (61) und/oder die zweite Hydraulikhauptpumpe (62) ein verstellbares Schluckvolumen aufweist.

6. Spezialtiefbaugerät nach einem der vorgenannten Ansprüche, **dadurch gekennzeichnet, dass** der erste Motor und der zweite Motor mit einer Steuereinheit (8) verbunden sind, über die sie unabhängig voneinander ansteuerbar sind, wobei der erste Motor und/oder der zweite Motor durch einen Elektromotor (611, 621) gebildet ist.

7. Spezialtiefbaugerät nach einem der Ansprüche 2 bis 6, **dadurch gekennzeichnet, dass** wenigstens eine der wenigstens einen Nebenhydraulikpumpe über einen separaten, dritten Motor angetrieben ist, der vorzugsweise durch einen Elektromotor gebildet ist.

8. Spezialtiefbaugerät nach Anspruch **7, dadurch gekennzeichnet, dass** mehrere Nebenhydraulikpumpen angeordnet sind, die in wenigstens zwei Gruppen zusammengefasst sind, von denen wenigstens eine Gruppe über einen gemeinsamen Motor, vorzugsweise einen Elektromotor angetrieben ist.

9. Spezialtiefbaugerät nach einem der Ansprüche 6 bis 8, **dadurch gekennzeichnet, dass** eine Rechnereinheit (81) angeordnet ist, die mit der Steuereinheit (8) verbunden ist und die eingerichtet ist, bei vorgegebenem Druck und Volumenstrom oder bei vorgegebener Leistung die Drehzahl des ersten Motors und die Drehzahl des zweiten Motors zu bestimmen, bei denen der beste Wirkungsgrad erzielt ist.

10. Spezialtiefbaugerät nach Anspruch 9, **dadurch gekennzeichnet, dass** in der Rechnereinheit (81) ein mindestens ein zwei- oder dreidimensionales Kennfeld hinterlegt ist, aus dem sich der Wirkungsgrad in Abhängigkeit zumindest von Drehzahl und Druckdifferenz ergibt und anhand dessen die Ermittlung der Drehzahlen des ersten Motors und des zweiten Motors erfolgt.

11. Spezialtiefbaugerät nach Anspruch 10, **dadurch gekennzeichnet, dass** in der Rechnereinheit (81) ein Kennfeld des ersten und ein Kennfeld des zweiten Motors hinterlegt ist, aus denen sich der Wirkungsgrad des jeweiligen Motors aus Drehzahl und Drehmoment ergibt, wobei die Ermittlung der Drehzahlen des ersten Motors und des zweiten Motors anhand der hinterlegten Kennfelder aller Motoren erfolgt.

12. Spezialtiefbaugerät nach einem der Ansprüche 6 bis 11, **dadurch gekennzeichnet, dass** Sensoren zur Erfassung des Volumenstroms und des Drucks wenigstens eines Hydraulikkreislaufs einer Hydraulikhauptpumpe (61, 62) und/oder Sensoren zur Erfassung der Drehzahl und/oder des Drucks und/oder des Schluckvolumens wenigstens einer Hydraulikhauptpumpe (61, 62) angeordnet sind, die mit der Rechnereinheit (81) verbunden sind.

13. Spezialtiefbaugerät nach einem der Ansprüche 6 bis 11, **dadurch gekennzeichnet, dass** ein Arbeitsgerät von der Aufnahme des Trägergeräts (1) aufgenommen ist, das wenigstens einen Hydraulikmotor (511, 521, 93) umfasst, der über Leitungen (53, 54, 55, 94, 95) mit der ersten Hydraulikhauptpumpe (61) und/oder der zweiten Hydraulikhauptpumpe (62) verbunden ist, wobei Sensoren zur Erfassung der Drehzahl und des Schluckvolumens des wenigstens einen Hydraulikmotors (511, 521, 93) oder der Drehzahl und des Schluckvolumens der wenigstens einer Hydraulikhauptpumpe (61, 62) und zur Erfassung von Drücken vor und/oder nach wenigstens einer Hydraulikhauptpumpe (61, 62) und/oder wenigstens eines Hydraulikmotors (511, 521, 93) angeordnet sind, die mit der Rechnereinheit (81) verbunden sind.

14. Spezialtiefbaugerät nach Anspruch 13, **dadurch gekennzeichnet, dass** wenigstens ein Hydraulikmotor (511, 521, 93) ein veränderbares Schluckvolumen aufweist, wobei der wenigstens eine Hydraulikmotor (511, 521, 93) mit einer Steuereinheit (8) verbunden ist, über welche die Drehzahl und das Schluckvolumen einstellbar ist und die mit der Rechnereinheit (81) verbunden ist.

15. Verfahren zum Betrieb eines Spezialtiefbaugerätes nach einem der vorgenannten Ansprüche, insbesondere Ramm- oder Bohrgerätes mit einem hydraulischen Arbeitsgerät, das über wenigstens zwei Hydraulikhauptpumpen (61, 62) mit Hydrauliköl gespeist wird, **dadurch gekennzeichnet, dass** die wenigstens zwei Hydraulikhauptpumpen (61, 62) jeweils über einen Elektromotor (611, 621) angetrieben werden, wobei wenigsten zwei der wenigstens zwei Hydraulikhauptpumpen (61, 62) auch bei Zusammenführung der von diesen erzeugten Hydraulikölvolumenströmen unabhängig voneinander mit unterschiedlicher Drehzahl betrieben werden.

16. Verfahren nach Anspruch 15, **dadurch gekennzeichnet, dass** für die einzelnen Elektromotoren (611, 621) in Abhängigkeit von einem vorgegebenen Druck oder einer vorgegebenen Leistung anhand von Kennlinienfeldern die für einen optimalen Wirkungsgrad der Elektromotoren (611, 621) und der von diesen angetriebenen Hydraulikhauptpumpen (61, 62) erforderliche Drehzahl ermittelt wird, mit der diese betrieben werden.
